# EUROPEAN PATENT SPECIFICATION

(11) **EP 3 124 560 B1**
(45) Date of publication and mention of the grant of the patent: **07.10.2020**
(21) Application number: 15770087.3
(22) Date of filing: 26.03.2015
(51) Int. Cl.: C09D 11/101, C09D 11/324, C09D 11/322, C09D 11/36, C09D 11/38, B41J 2/01, B41M 5/00

(54) **ACTIVE ENERGY RAY-CURABLE INKJET INK COMPOSITION**
ENERGIESTRAHLEN-HÄRTBARE TINTENSTRAHLTINTENZUSAMMENSETZUNG
COMPOSITION D'ENCRE POUR JET D'ENCRE DURCISSABLE SOUS UN RAYONNEMENT D'ÉNERGIE ACTIVE

(30) Priority: 26.03.2014 JP 2014062946
(43) Date of publication of application: 01.02.2017
(73) Proprietor: Toyo Ink SC Holdings Co., Ltd., Tokyo 104-8377 (JP); Toyo Ink Co., Ltd., Tokyo 104-8378 (JP)
(72) Inventor: FUJIWARA, Daisuke, Tokyo 104-8378 (JP); KONNO, Tohru, Tokyo 104-8378 (JP)
(74) Representative: Grünecker Patent- und Rechtsanwälte PartG mbB
(86) International application number: PCT/JP2015/059404
(87) International publication number: WO 2015/147178

(56) References cited:
- EP-A1- 2 586 838
- EP-A1- 2 599 842
- EP-A1- 2 692 803
- EP-A1- 3 118 271
- EP-A1- 3 124 561
- WO-A1-2013/062090
- JP-A- 2012 193 315
- JP-A- 2012 207 084
- JP-A- 2012 219 255
- JP-A- 2013 177 525
- JP-A- 2013 245 240
- JP-A- 2013 245 241
- US-A1- 2012 274 717

## Description

### TECHNICAL FIELD

The present invention relates to an ink composition, which is used for active energy ray-curable inkjet printing. More specifically, the present invention relates to an ink composition, which has excellent initiator solubility, little odor and low viscosity, excellent curability and abrasion resistance, and can suppress the occurrence of curing wrinkles.

### BACKGROUND ART

An inkjet printing method is characterized by not using a plate in the process of printing. Therefore, the inkjet printing method has low device costs and low running costs. The demand for an inkjet printing method is further growing accompanied with an increase in market demand for print on demand in recent years.

An ink composition which can impart a variety of resistance such as good water resistance, solvent resistance and abrasion resistance in an inkjet printing method has been demanded in recent years. Typically, an ultraviolet ray-curable inkjet ink composition, which is cured by irradiation of ultraviolet rays, has been used.

A method for increasing a printing film thickness and a method for improving the curability of ink composition have been proposed to improve a variety of resistance mentioned above. It is known however that when increasing a printing film thickness, because uneven curing between the surface and inside of the film become greater, curing wrinkles easily occur. A method for improving reactivity by increasing the amount of initiator, and a method for using a polyfunctional monomer with high curability have been proposed to prevent curing wrinkles. However, it has been demanded that the method for using a polyfunctional monomer be improved, because the method has a tendency to increase ink viscosity and decrease discharge stability and image quality due to the high viscosity of the polyfunctional monomer.

To solve the above problems, various investigations have been made until now. Patent Literature 1 for example discloses a method for adding N-vinylcaprolactam to an ink composition to improve adhesion to a base material and the abrasion resistance and alcohol resistance of a cured film. In addition, Patent Literatures 2 and 3 disclose a method for using a monofunctional monomer and a polyfunctional monomer in combination in an ink composition to improve the stretch properties of a cured film and the occurrence of curing wrinkles when a thick film is cured. All of the conventional methods however relate to ink compositions requiring a monofunctional monomer. Therefore, the ink compositions still have problems of image deterioration caused by the high surface tension of monofunctional monomers, and odor. All of the conventional methods also have a problem in that it is difficult to fully dissolve an initiator in the ink compositions, which easily causes poor curability, curing wrinkles and poor image quality.

As described above, there has not been provided a satisfying ink as a curable inkjet ink composition, which has little ink odor and low viscosity, may be suitably used for an inkjet printing method, further has excellent curability, and does not easily cause curing wrinkles.

### CITATION LIST

### PATENT LITERATURE

Patent Literature 1: JP 2012-116934 A
Patent Literature 2: JP 2013-060548 A
Patent Literature 3: JP 2013-177525 A

### SUMMARY OF INVENTION

### PROBLEMS TO BE SOLVED BY THE INVENTION

In view of the above-described circumstances, an objective of the present invention is to provide an active energy ray-curable ink composition which is used for an inkjet printing method. More specifically, an objective of the present invention is to provide an active energy ray-curable inkjet ink composition, which has excellent initiator solubility, little odor and low viscosity, and further has excellent curability and abrasion resistance, and does not easily cause curing wrinkles.

### MEANS TO SOLVE THE PROBLEMS

As a result of various investigations on an active energy ray-curable ink composition containing a pigment, a polymerizable compound and a photopolymerization initiator, the present inventors found that the above problems could be solved by using specific compounds as the above polymerizable compound and the above photopolymerization initiator in combination and properly adjusting the amounts, thereby completing the present invention.

That is, the present invention relates to the following embodiments.
(1) An active energy ray-curable inkjet ink composition containing a pigment, a polymerizable compound and a photopolymerization initiator,
   wherein the polymerizable compound comprises 80 wt% or more of aliphatic ethylenically polymerizable compounds based on a total weight of the polymerizable compound, wherein the aliphatic ethylenically polymerizable compounds comprise polyfunctional (meth)acrylates including at least 2-(2-vinyloxyethoxy)ethyl acrylate and dipropylene glycol diacrylate,
   the photopolymerization initiator comprises an acyl phosphine oxide, and
   an amount of the dipropylene glycol diacrylate is 16 wt% or more and an amount of the acyl phosphine oxide is 10 wt% or more with respect to a total weight of inkjet ink composition.
(2) The active energy ray-curable inkjet ink composition according to (I), wherein the acyl phosphine oxide comprises a monoacyl phosphine oxide.
(3) The active energy ray-curable inkjet ink composition according to (1) or (2), wherein the inkjet ink composition further comprises a glycol-based organic solvent.
(4) The active energy ray-curable inkjet ink composition according to any one of (1) to (3), wherein the photopolymerization initiator further comprises an a-aminoacetophenone-based polymerization initiator.
(5) The active energy ray-curable inkjet ink composition according to any one of (I) to (4), wherein the photopolymerization initiator further comprises a photopolymerization initiator having a thioxanthone skeleton.
(6) The active energy ray-curable inkjet ink composition according to any one of (1) to (5), wherein the aliphatic ethylenically polymerizable compounds further comprise other polyfunctional (meth)acrylate.
(7) The active energy ray-curable inkjet ink composition according to any one of (1) to (6), wherein the amount of the pigment is 4.0 wt% or more with respect to a total weight of the inkjet ink composition, and the pigment comprises 60 wt% or more of carbon black with respect to a total weight of the pigment.

### ADVANTAGEOUS EFFECTS OF INVENTION

According to the present invention, there can be provided an active energy ray-curable inkjet ink composition, which has improved initiator solubility, little odor and low viscosity, and further excellent curability and abrasion resistance, does not easily cause curing wrinkles and may be suitably used for an inkjet printing method.

The disclosure of the application relates to the subject described in Japanese patent application No. 2014-062946 filed on March 26, 2014, and the disclosed contents of the description are incorporated herein by reference.

### BEST MODE FOR CARRYING OUT THE INVENTION

The embodiments of the present invention will now be described in detail.

Unless otherwise specified, the term "ink composition" in the description below means "active energy ray-curable inkjet ink composition." In addition, unless otherwise specified, the description of for example "(meth)acrylate" intends to indicate compounds of both "acrylate" and "methacrylate."

In an embodiment of an ink composition according to the present invention, the ink composition comprises a pigment, polymerizable compounds and a photopolymerization initiator as constituents. In another embodiment of the present invention, the ink composition comprises an organic solvent along with the above constituents. In another embodiment of the present invention, the ink composition can comprise well-known ink components such as a pigment dispersing agent and a variety of additives along with the above constituents and organic solvent. The main constituents of an ink composition will now be described in detail.

### <Polymerizable Compound>

In general, a polymerizable compound having more polymerizable reaction groups with respect to its molecular weight indicates higher reactivity. Therefore, it is known that when such polymerizable compound with higher reactivity is used, excellent curability is shown even when the amount of radical, a trigger of the polymerization reaction, is slight. Therefore, when comparing polymerizable compounds with the similar structure, a polymerizable compound having more polymerizable reaction groups in its molecule, i.e. a polyfunctional polymerizable compound, has a higher reaction group equivalent, and curability is improved.

A polyfunctional polymerizable compound containing two or more polymerizable reaction groups shows excellent curability; however, there exists a problem in that viscosity easily becomes higher, which is caused from interactions between molecules. When a polyfunctional polymerizable compound is used, the viscosity of an ink composition exceeds 100 mPa·s, and the obtained composition cannot be used as an inkjet ink composition in some cases.

In the present invention, 2-(2-vinyloxyethoxy)ethyl acrylate and dipropylene glycol diacrylate are used in combination to solve the above-described problems. These are polyfunctional polymerizable compounds, but are characterized by extremely low viscosity (10 mPa·s or less) and little odor. The reason is unclear, but among polyfunctional polymerizable compounds, 2-(2-vinyloxyethoxy)ethyl acrylate is a polymerizable compound which has excellent curability and low viscosity. However, 2-(2-vinyloxyethoxy)ethyl acrylate has slightly high surface tension, and when used individually, spreading on a base material surface after the impact of an ink is not good and image quality after printing tends to be low. On the other hand, dipropylene glycol diacrylate is characterized by low viscosity and low surface tension. Therefore, dipropylene glycol diacrylate can improve spreading of an ink on a base material surface after printing and contribute to high image quality. However, its curability is inferior to that of 2-(hydroxyethoxy)ethyl acrylate. In the present invention, therefore, various desired characteristics such as low viscosity, high image quality, little odor and excellent curability can be achieved by using the above two types of polymerizable compound in combination and properly adjusting the amounts thereof. In addition, the combination of the above two types of polymerizable compound is effective from the viewpoint that photopolymerization initiator solubility is improved. An improvement in photopolymerization initiator solubility promotes curing reaction and provides the effect of improving curing wrinkles.

In an embodiment of the present invention, the amount of 2-(2-vinyloxyethoxy)ethyl acrylate is preferably at least 5 wt% based on the total weight of ink composition from the viewpoint that the above-described desired characteristics and effect are easily obtained. In an embodiment, the above amount is preferably 5 to 80 wt%, more preferably 5 to 50 wt%, and further preferably 5 to 30 wt%. In another embodiment, the above amount is preferably 10 to 60 wt% and more preferably 20 to 50 wt%. On the other hand, the amount of dipropylene glycol diacrylate is preferably 16 wt% or more based on the total weight of ink composition. In an embodiment, the above amount is preferably 16 to 80 wt% and more preferably 30 to 70 wt%.

In an embodiment of an ink composition, the amount of the whole polymerizable compound is preferably 30 to 90 wt% and more preferably 50 to 80 wt% based on the total weight of ink composition. For example, the total amount of the above two types of polymerizable compound can be adjusted within the above range. As another example, the sum total of the total amount of the above two types of polymerizable compound and the amount of polymerizable compound other than the above can be adjusted within the above range. Other polymerizable compounds which may be used in combination can be materials conventionally existing as the constituents of inks, which may be optionally selected and used.

Specifically, other polymerizable compounds which may be used in combination can be monofunctional polymerizable compounds and/or polyfunctional polymerizable compounds other than the above two types of polymerizable compound. Specific examples thereof will be described below.

### (Monofunctional Polymerizable Compound)

The monofunctional polymerizable compounds are intended to be compounds having only a polymerizable reaction group in their molecule. Examples thereof include the following:
monofunctional (meth)acrylate compounds having an aromatic ring including benzyl (meth)acrylate, 2-phenoxyethyl(meth)acrylate, (ethoxylated(or propoxylated) 2-phenoxyethyl (meth)acrylate, 2-hydroxy-3-phenoxypropyl (meth)acrylate and phenoxydiethylene glycol (meth)acrylate and the like;
(meth)acrylate compounds such as dicyclopentanyl (meth)acrylate, dicyclopentenyl (oxyethyl) (meth)acrylate, cyclohexyl (meth)acrylate, tetrahydrofurfuryl (meth)acrylate, isobornyl (meth)acrylate, 1,4-cyclohexanedimethanol (meth)acrylate and trimethylolpropane formal (meth)acrylate,
aliphatic ethylenically polymerizable compounds having a cyclic structure including acryloylmorpholine, N-acryloyloxyethyl hexahydrophthalimide, N-vinylcaprolactam and N-vinylpyrrolidone and the like; and
aliphatic ethylenically polymerizable compounds not having a cyclic structure including (meth)acrylate compounds such as 2-(2-ethoxyethoxy)ethyl (meth)acrylate, 2-methoxyethyl (meth)acrylate, methoxytriethylene glycol (meth)acrylate, 2-ethoxyethyl (meth)acrylate, ethoxyethoxy ethyl (meth)acrylate, methoxydipropylene glycol (meth)acrylate, methoxypolypropylene glycol (meth)acrylate, dipropylene glycol (meth)acrylate, polypropylene glycol mono(meth)acrylate, isoamyl (meth)acrylate, isooctyl (meth)acrylate, isodecyl (meth)acrylate, lauryl (meth)acrylate, tridecyl (meth)acrylate and stearyl (meth)acrylate, p-carboxyethyl (meth)acrylate, 2-hydroxyethyl (meth)acrylate, 2-hydroxypropyl (meth)acrylate and 4-hydroxybutyl (meth)acrylate, as well as N-vinylformamide and the like.

It is effective to use a monofunctional polymerizable compound from the viewpoint that the viscosity of inks is lowered. It is known that among monofunctional polymerizable compounds, 2-phenoxyethyl (meth)acrylate, a polymerizable compound having an aromatic ring, is a monomer with relatively good curability. 2-Phenoxyethyl (meth)acrylate however has odor and high surface tension (39 mN/m), and thus the spreading of dot diameter is not good, which easily causes a bad effect on images. On the other hand, aliphatic ethylenically polymerizable compounds may be suitably used in terms of not only curability but also odor. Therefore, in an embodiment of the present invention, the aliphatic ethylenically polymerizable compounds are preferably used as a polymerizable compound. Herein, the "aliphatic ethylenically polymerizable compounds" means a polymerizable compound which does not have an aromatic ring in its molecule.

Among aliphatic ethylenically polymerizable compounds previously exemplified as monofunctional polymerizable compounds, monofunctional (meth)acrylate compounds are preferred. When using a monofunctional polymerizable compound, it is preferred that a compound with a surface tension of 38 mN/m or less be selected in terms of the image quality of color printing. Preferred examples of monofunctional polymerizable compounds include lauryl acrylate, tetrahydrofurfuryl acrylate, isodecyl acrylate, isooctyl acrylate, tridecyl acrylate, trimethylolpropane formal acrylate and isobornyl acrylate and the like. When using these compounds, odor and viscosity are easily improved.

When using a monofunctional polymerizable compound, the amount thereof is preferably 20 wt% or less and more preferably 10 wt% or less based on the total weight of ink composition in terms of ink odor, curability, image quality and initiator solubility.

### (Polyfunctional Polymerizable Compound)

In the present description, polyfunctional polymerizable compounds indicate bifunctional and trifunctional or more polymerizable compounds having two or more polymerizable reaction groups in their molecule. However, 2-(2-vinyloxyethoxy)ethyl acrylate and dipropylene glycol diacrylate, the essential components of an ink composition, are not contained in the range of polyfunctional polymerizable compounds.

An example of a polyfunctional polymerizable compound includes polyfunctional aliphatic ethylenically polymerizable compounds which are bifunctional or more. Specific examples thereof include polyfunctional (meth)acrylate compounds which are bifunctional or more.

Specific examples of bifunctional (meth)acrylate compounds include the following:
ethylene glycol di(meth)acrylate, diethylene glycol di(meth)acrylate, polyethylene glycol di(meth)acrylate, dipropylene glycol di(meth)acrylate, 1,6-hexanediol di(meth)acrylate, (ethoxylated(or propoxylated)) 1,6-hexanediol di(meth)acrylate, 1,9-nonanediol di(meth)acrylate, 1,10-decanediol di(meth)acrylate, ethoxylated 1,6-hexanediol di(meth)acrylate, neopentyl glycol di(meth)acrylate, polypropylene glycol di(meth)acrylate, 1,4-butanediol di(meth)acrylate, tetraethylene glycol di(meth)acrylate, 2-n-butyl-2-ethyl-1,3-propanediol di(meth)acrylate, hydroxypivalic acid neopentyl glycol di(meth)acrylate, 1,3-butylene glycol di(meth)acrylate, tripropylene glycol di(meth)acrylate, ethoxylated tripropylene glycol di(meth)acrylate, neopentyl glycol-modified trimethylolpropane di(meth)acrylate, stearic acid-modified pentaerythritol di(meth)acrylate, neopentyl glycol oligo(meth)acrylate, 1,4-butanediol oligo(meth)acrylate, 1,6-hexanediol oligo(meth)acrylate, ethoxylated neopentyl glycol di(meth)acrylate, propoxylated neopentyl glycol di(meth)acrylate, tripropylene glycol di(meth)acrylate, dicyclopentanyl di(meth)acrylate, dimethylol-tricyclodecane di(meth)acrylate, cyclohexanedimethanol di(meth)acrylate, dimethylol dicyclopentane di(meth)acrylate, isocyanuric acid di(meth)acrylate and propoxylated isocyanuric acid di(meth)acrylate and the like.

Specific examples of trifunctional or more (meth)acrylate compounds include the following:
trimethylolpropane tri(meth)acrylate, hydroxypivalic acid trimethylolpropane tri(meth)acrylate, ethoxylated phosphoric acid tri(meth)acrylate, pentaerythritol tri(meth)acrylate, tetramethylolpropane tri(meth)acrylate, tetramethylolmethane tri(meth)acrylate, caprolactone-modified trimethylolpropane tri(meth)acrylate, propoxylated glyceryl tri(meth)acrylate, trimethylolpropane oligo(meth)acrylate, ethoxylated trimethylolpropane tri(meth)acrylate, propoxylated trimethylolpropane tri(meth)acrylate, pentaerythritol tetra(meth)acrylate, tetramethylolpropane tetra(meth)acrylate, tetramethylolmethane tetra(meth)acrylate, ethoxylated pentaerythritol tetra(meth)acrylate, ditrimethylolpropane tetra(meth)acrylate, dipentaerythritol hydroxypenta(meth)acrylate, dipentaerythritol hexa(meth)acrylate, caprolactone-modified dipentaerythritol hexa(meth)acrylate, ethoxylated dipentaerythritol hexa(meth)acrylate, tripentaerythritol (meth)acrylate, ethoxylated isocyanuric acid tri(meth)acrylate, and tri(2-hydroxyethyl isocyanurate) tri(meth)acrylate and the like.

Another example of polyfunctional aliphatic ethylenically polymerizable compounds includes monomers containing a plurality of vinyl groups as polymerizable reaction groups in their molecule. Specific examples thereof include butanediol divinyl ether, diethylene glycol divinyl ether, triethylene glycol divinyl ether, cyclohexanedimethanol divinyl ether, trimethylolpropane divinyl ether, pentaerythritol tri(or tetra)vinyl ether, trimethylolpropane diallyl ether and pentaerythritol tri(or tetra)allyl ether and the like.

In an embodiment, a polyfunctional (meth)acrylate having an aromatic ring may be used along with the above polyfunctional aliphatic ethylenically polymerizable compounds. Specific compounds thereof include propoxylated bisphenol A di(meth)acrylate, ethoxylated bisphenol A di(meth)acrylate, bisphenol F di(meth)acrylate, ethoxylated bisphenol F di(meth)acrylate and propoxylated bisphenol F di(meth)acrylate.

Among polyfunctional polymerizable compounds previously exemplified, aliphatic ethylenically polymerizable compounds not having an aromatic ring in their molecule are preferred, and polyfunctional (meth)acrylate compounds being bifunctional or more are particularly preferred. For example, dipentaerythritol hexaacrylate is preferred from the viewpoint of curability. In addition, 1,9-nonanediol diacrylate and/or 1,10-decanediol diacrylate are preferred from the viewpoint of ink viscosity and odor. When using a polyfunctional polymerizable compound, the amount thereof is preferably 20 wt% or less and more preferably 10 wt% or less based on the total weight of ink composition from the viewpoint of ink odor, curability, image quality and initiator solubility. In an embodiment, the above amount is preferably 0.1 to 10 wt%.

From the above viewpoints, in an embodiment of an ink composition, polymerizable compounds comprise 2-(2-vinyloxyethoxy)ethyl acrylate and dipropylene glycol diacrylate. In another embodiment, polymerizable compounds comprise the combination of the above two types of compound and other polymerizable compounds. Other polymerizable compounds preferably comprise aliphatic ethylenically polymerizable compounds. 2-(2-vinyloxyethoxy)ethyl acrylate and dipropylene glycol diacrylate belong to aliphatic ethylenically polymerizable compounds. Therefore, polymerizable compounds preferably comprise aliphatic ethylenically polymerizable compounds including at least 2-(2-vinyloxyethoxy)ethyl acrylate and dipropylene glycol diacrylate. The amount of aliphatic ethylenically polymerizable compounds based on the total weight of polymerizable compound is preferably 80 wt% or more and more preferably 90 wt% or more.

In the above embodiment, when comprising an aliphatic ethylenically polymerizable compound other than the above two types of compound, it is preferred to comprise a monofunctional (meth)acrylate compound and/or a bifunctional or more (meth)acrylate compound, and it is more preferred to comprise a polyfunctional (meth)acrylate which is trifunctional or more. As a preferred embodiment of polymerizable compounds, it is preferred that polymerizable compounds comprise as aliphatic ethylenically polymerizable compounds 2-(2-vinyloxyethoxy)ethyl acrylate and dipropylene glycol diacrylate, and other polyfunctional(meth)acrylate compounds which are bifunctional or more. In the above embodiment, it is preferred that the above polyfunctional (meth)acrylate compounds comprise at least one selected from the group consisting of dipentaerythritol hexaacrylate, 1,9-nonanediol diacrylate and 1,10-decanediol diacrylate. When using polyfunctional (meth)acrylate compounds other than the above two types of compound, improvements in curability and the scratch resistance of a cured film and an increase in hardness become easy. Among these, it is preferred to use a polyfunctional (meth)acrylate which is trifunctional or more.

In another embodiment, an ink composition may comprise oligomers and prepolymers as polymerizable compounds. Specific examples of oligomers and prepolymers include urethane (meth)acrylate, polyester (meth)acrylate, amine (meth)acrylate, epoxy (meth)acrylate and the like.

### <Photopolymerization Initiator>

The ink composition of the present invention comprises a photopolymerization initiator. The photopolymerization initiator is used in order to proceed with the photopolymerization reaction of polymerizable compounds by irradiation of active energy rays such as ultraviolet rays. The ink composition existing on the surface of recorded medium is cured by the above photopolymerization reaction to form an image. An example of active energy rays includes ultraviolet rays (UV). Ultraviolet rays (UV) are preferred in terms of excellent safety and being able to reduce the costs of light source lamps.

In an embodiment of the present invention, it is preferred that a photopolymerization initiator comprise an acyl phosphine oxide-based photopolymerization initiator (hereinafter, simply also referred to as "acyl phosphine oxide.") In the above embodiment, the amount of acyl phosphine oxide is preferably 10 wt% or more based on the total weight of ink composition. According to the above embodiment, excellent curability can be obtained, and further the occurrence of curing wrinkles can be suppressed. In addition, curing can be carried out by irradiation from almost all of lamps without influences by wavelengths of existing light source lamps for active energy rays. Although it is not particularly intended to be limited, the above-described effects are easily obtained when the amount of acyl phosphine oxide contained in an ink composition is 10.3 wt% to 20 wt%.

Conventionally, the amount of photopolymerization initiator contained in an ink composition has been generally less than 10 wt%. However, when the amount thereof is less than 10 wt%, curability is insufficient. In addition, curability is inferior not only on the surface of a coated film but also on the inner surface, and curing wrinkles easily occur. A reason for using photopolymerization initiator in an amount of less than 10 wt% relates to a risk that a photopolymerization initiator is precipitated during the storage over time of an ink composition due to low solubility of photopolymerization initiator in polymerizable compounds. The precipitation of a photopolymerization initiator causes head nozzle clogging at the time of printing, which decreases discharge stability. In addition, the reaction rate of polymerizable compounds and photopolymerizable compounds decreases due to the precipitation of a photopolymerization initiator, which decreases curability.

On the other hand, according to the present invention, polymerizable compounds comprising 2-(2-vinyloxyethoxy)ethyl acrylate and dipropylene glycol diacrylate, and a photopolymerization initiator comprising an acyl phosphine oxide are combined, and whereby a risk of the precipitation of the photopolymerization initiator can be effectively suppressed. Therefore, solubility of the photopolymerization initiator is improved by the specific combination of the polymerizable compounds and the photopolymerization initiator, and the amount of the photopolymerization initiator can be increased. In an embodiment, for example, the amount of acyl phosphine oxide may be 10.3 wt% or more based on the total weight of the ink composition. By increasing the amount of photopolymerization initiator contained in the ink composition, excellent curability is easily achieved. When printing having a thick film of 10 µm or more is carried out, for example, sufficient curability can be obtained. In addition, when printing having a thin film of 6 µm or less is carried out, influence of oxygen inhibition is low and sufficient curability can be obtained.

The acyl phosphine oxide which may be used in the present invention may be an acyl phosphine oxide-based compound well known as a photopolymerization initiator. Although it is not particularly intended to be limited, examples thereof include the following:
monoacyl phosphine oxides including
   2,4,6-trimethylbenzoyl-diphenylphosphine oxide,
   2,4,6-triethylbenzoyl-diphenylphosphine oxide,
   2,4,6-triphenylbenzoyl-diphenylphosphine oxide,
   2,4,6-trimethylbenzoyl-ethoxy-phenylphosphine oxide and the like; and
bisacyl phosphine oxides including
   bis(2,4,6-trimethylbenzoyl)-phenylphosphine oxide and
   bis(2,6-dimethoxybenzoyl)-2,4,4-trimethylpentyl phosphine oxide and the like.

As an embodiment, the compounds exemplified may be used individually or two or more compounds may be used in combination.

Examples of acyl phosphine oxide-based photopolymerization initiator available as commercial products include the following:
"DAROCUR TPO" manufactured by BASF (2,4,6-trimethylbenzoyl-diphenylphosphine oxide);
"IRGACURE 819" manufactured by BASF (bis(2,4,6-trimethylbenzoyl)-phenylphosph ine oxide)
"Irgacure TPO-L" manufactured by BASF (2,4,6-trimethylbenzoyl-ethoxy-phenylphosphine oxide); and
"CGI 403" manufactured by BASF (bis(2,6-dimethoxybenzoyl)-2,4,4-trimethylpentyl phosphine oxide).

In an embodiment, an acyl phosphine oxide preferably comprises a monoacyl phosphine oxide. The monoacyl phosphine oxide is preferred from the viewpoint of solubility in polymerizable compounds specified in the present invention. Therefore, according to the above embodiment, the solubility of photopolymerization initiator in an ink composition is improved. The curing reaction of the ink composition sufficiently proceeds, thereby easily obtaining excellent curability. In an embodiment, the amount of monoacyl phosphine oxide based on the total weight of acyl phosphine oxide is preferably 50 wt% or more, more preferably 70 wt% or more and further preferably 90 wt% or more.

### (Photopolymerization Initiator which may be used in combination)

In an embodiment of an ink composition, an acyl phosphine oxide and another photopolymerization initiator may be used in combination as a photopolymerization initiator. Other photopolymerization initiators which may be used in combination are not particularly limited, and may be freely selected from well-known photopolymerization initiators considering the curing rate, physical properties of a cured coated film and compatibility with coloring materials and the like. In an embodiment, among these, a molecule cleavage type or hydrogen abstraction type photopolymerization initiator is preferably used.

Specific examples of photopolymerization initiators which may be used include the following:
benzoin isobutyl ether;
2,4-diethylthioxanthone;
2-isopropylthioxanthone, and 2-benzyl-2-dimethylamino-1-(4-morpholinophenyl)-butan-1-one (available as "IRGACURE 369" manufactured by BASF);
2-(dimethylamino)-2-[(4-methylphenyl)methyl]-1-[4-(4-morpholinyl)phenyl]-1 -butanone (available as "IRGACURE 379" manufactured by BASF);
2-methyl-1-(4-methy)thio phenyl)-2-morpholino propan-1-one (available as "IRGACURE 907" manufactured by BASF);
oligo(2-hydroxy-2-methyl-1-(4-(1-methylvinyl)phenyl)propanone) (available as "Esacure One" manufactured by Lamberti);
4-benzoyl-4'-methyl-diphenyl sulfide;
1,2-octanedione; and
1-(4-(phenylthio)-2,2-(O-benzoyloxime)).

These photopolymerization initiators are preferred from the point of view of the following: the reaction for generating radicals in the initiators is not inhibited by the light absorption of coloring materials or polymerizable compounds; and it is easy to increase the curability of ink compositions due to a high radical generating efficiency of the initiators.

Specific examples of molecule cleavage type photopolymerization initiators which may be used include 1-hydroxycyclohexyl phenyl ketone, benzoin ethyl ether, benzyl dimethyl ketal, 2-hydroxy-2-methyl-1-phenylpropan-1-one and 1-(4-isopropylphenyl)-2-hydroxy-2-methylpropan-1-one. In addition, specific examples of hydrogen abstraction type photopolymerization initiators which may be used include benzophenone, 4-phenylbenzophenone and isophthalphenone.

### (Sensitizer)

In an embodiment, an ink composition can comprise a sensitizer for the above photopolymerization initiator. For example, amines which do not cause addition reaction with the above polymerizable compounds may be used as a sensitizer. Specific examples of amines which may be used as a sensitizer include trimethylamine, methyldimethanolamine, triethanolamine, p-diethylaminoacetophenone, ethyl p-dimethylamino benzoate, isoamyl p-dimethylamino benzoate, N,N-dimethyl benzylamine, 4,4'-diethylamino benzophenone and 4,4'-bis(diethylamino)benzophenone.

The ink composition of the present invention is not limited to other photopolymerization initiators and sensitizers which may be used in combination previously exemplified, and well-known compounds which have excellent solubility in the ink composition and do not inhibit ultraviolet transmitting properties may be appropriately selected and used. In an embodiment, it is preferred that one of the photopolymerization initiators is used individually, or that two or more of photopolymerization initiators are used in combination considering the wavelength spectra of active energy rays and the optical absorption spectra of photopolymerization initiators.

For example, when a gallium lamp and an LED lamp with a long wavelength such as 405 nm, 395 nm or 385 nm are used, it is preferred that at least one compound selected from the group consisting of 2,4-diethylthioxanthone, 2-isopropylthioxanthone and 2-(dimethylamino)-2-[(4-methylphenyl)methyl]-1-[4-(4-morpholinyl)phenyl)-1-butanon e is used in combination with an acyl phosphine oxide.

As another example, when using a short wavelength lamp (e.g. a metal halide lamp etc.), it is preferred that at least one compound selected from the group consisting of 2-(dimethylamino)-2-[(4-methylphenyl)methyl]-1-[4-(4-morpholinyl)phenyl]-1-butanon e, 4-benzoyl-4'-methyl-diphenyl sulfide, ethyl p-dimethylamino benzoate and oligo(2-hydroxy-2-methyl-1-(4-1-methylvinyl)phenyl)propane) is used in combination with an acyl phosphine oxide.

The amount of photopolymerization initiator and/or sensitizer which is used in combination with an acyl phosphine oxide is preferably 1 to 15 wt%, more preferably 1 wt% to 10 wt%, and further preferably 3 to 10 wt% based on the weight of ink composition.

As an embodiment, among the above, it is preferred that a photopolymerization initiator having a thioxanthone skeleton such as 2,4-diethylthioxanthone or 2-isopropylthioxanthone, and an acyl phosphine oxide is used in combination. Among these, it is preferred that 2-isopropylthioxanthone is used in combination, from the point of view of increment of a sensitization effect on acyl phosphine oxides. According to the above embodiment, ultraviolet rays on the long wavelength side are efficiently absorbed, and efficient conversion into radicals is easy. The amount of photopolymerization initiator having a thioxanthone skeleton described above is preferably 1 to 15 wt%, more preferably 2 to 10 wt% and further preferably 3 to 10 wt% based on the total weight of ink composition.

As yet another embodiment, it is preferred that an a-aminoacetophenone-based photopolymerization initiator and an acyl phosphine oxide is used in combination. Among the above, it is preferred that an a-aminoacetophenone-based photopolymerization initiator having a morpholinyl skeleton in its molecule is used. Preferred examples thereof include 2-benzyl-2-dimethylamino-1-(4-morpholinophenyl)-butan-1-one, 2-(dimethylamino)-2-[(4-methylphenyl)methyl]-1-[4-(4-morpholinyl)phenyl]-1-butanon e and 2-methyl-1-(4-methylthiophenyl)-2-morpholinopropan-1-one and the like. Among these, it is preferred that 2-(dimethylamino)-2-[(4-methylphenyl)methyl]-1-[4-(4-morpholinyl)phenyl]-1-butanon e is used in combination.

According to such embodiment, not only when using a short wavelength lamp but also when using a long wavelength lamp, a good balance between curability and dot diameter is easily obtained. The amount of a-aminoacetophenone-based photopolymerization initiator described above is preferably 1 to 15 wt%, more preferably 2 to 10 wt% and further preferably 2 to 5 wt% based on the total weight of ink composition.

In an embodiment of an ink composition, the amount of photopolymerization initiator comprising an acyl phosphine oxide is preferably 10 to 30 wt% and more preferably 15 to 25 wt% based on the total weight of ink composition.

In an embodiment, an ink composition can comprise a stabilizing agent. By using a stabilizing agent, the viscosity stability over time of inks and the viscosity stability on a recording device are easily raised. Specific examples of stabilizing agents which may be used include hindered phenol compounds, phenothiazine compounds, hindered amine compounds, aromatic amines, phosphorous compounds, sulfur compounds, hydrazine compounds and amide compounds and the like.

Preferred stabilizing agents in terms of solubility in polymerizable compounds and color of a stabilizing agent itself include the following.

Hindered phenol compounds: "BHT SWANOX" and "NONFLEX Alba" manufactured by Seiko Chemical Co., Ltd.; and "H-BHT" manufactured by Honshu Chemical Industry Co., Ltd.

Phenothiazine compounds: "PHENOTHIAZINE" manufactured by Seiko Chemical Co., Ltd.; and "Phenothiazine" manufactured by Sakai Chemical Industry Co., Ltd.

Hindered amine compounds: "HO-TEMPO" manufactured by Evonik Degussa.

Phosphorous compounds: "Triphenylphosphine" manufactured by BASF.

In an embodiment, an ink composition can comprise an organic solvent. By using an organic solvent, it is easy to lower the viscosity of an ink composition and improve the spreading properties on a print base material.

Preferred organic solvents include glycol-based organic solvents. Specific glycol-based organic solvents include the monoacetates, diacetates, diols, monoalkyl ethers, and dialkyl ethers and lactic acid esters, and the like, which are respectively based on glycol compounds.

Monoacetates of glycol compounds: ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, propylene glycol monomethyl ether acetate, dipropylene glycol monomethyl ether acetate, ethylene glycol monomethyl ether propionate, ethylene glycol monoethyl ether propionate, ethylene glycol monobutyl ether propionate, diethylene glycol monomethyl ether propionate, diethylene glycol monoethyl ether propionate, diethylene glycol monobutyl ether propionate, propylene glycol monomethyl ether propionate, dipropylene glycol monomethyl ether propionate, ethylene glycol monomethyl ether butyrate, ethylene glycol monoethyl ether butyrate, ethylene glycol monobutyl ether butyrate, diethylene glycol monomethyl ether butyrate, diethylene glycol monoethyl ether butyrate, diethylene glycol monobutyl ether butyrate, propylene glycol monomethyl ether butyrate, and dipropylene glycol monomethyl ether butyrate and the like.

Diacetates of glycol compounds: ethylene glycol diacetate, diethylene glycol diacetate, propylene glycol diacetate, dipropylene glycol diacetate, ethylene glycol acetate propionate, ethylene glycol acetate butyrate, ethylene glycol propionate butyrate, ethylene glycol dipropionate, ethylene glycol acetate dibutyrate, diethylene glycol acetate propionate, diethylene glycol acetate butyrate, diethylene glycol propionate butyrate, diethylene glycol dipropionate, diethylene glycol acetate dibutyrate, propylene glycol acetate propionate, propylene glycol acetate butyrate, propylene glycol propionate butyrate, propylene glycol dipropionate, propylene glycol acetate dibutyrate, dipropylene glycol acetate propionate, dipropylene glycol acetate butyrate, dipropylene glycol propionate butyrate, dipropylene glycol dipropionate, and dipropylene glycol acetate dibutyrate and the like.

Diols of glycol compounds: ethylene glycol, diethylene glycol, triethylene glycol, propylene glycol, and dipropylene glycol and the like.

Monoalkyl ethers of glycol compounds: ethylene glycol monoethyl ether, ethylene glycol monobutyl ether, propylene glycol monomethyl ether, propylene glycol monoethyl ether, propylene glycol monopropyl ether, propylene glycol monobutyl ether, diethylene glycol monoethyl ether, diethylene glycol monobutyl ether, dipropylene glycol monomethyl ether, dipropylene glycol monoethyl ether, dipropylene glycol monobutyl ether, dipropylene glycol n-propyl ether, triethylene glycol monomethyl ether, triethylene glycol monoethyl ether, triethylene glycol monobutyl ether, tripropylene glycol monomethyl ether, tripropylene glycol monobutyl ether, and tetraethylene glycol monobutyl ether and the like.

Dialkyl ethers of glycol compounds: ethylene glycol diethyl ether, ethylene glycol dimethyl ether, ethylene glycol methyl ethyl ether, diethylene glycol methyl ethyl ether, diethylene glycol dimethyl ether, diethyl diglycol (diethylene glycol diethyl ether), diethylene glycol methyl butyl ether, diethylene glycol dibutyl ether, triethylene glycol dimethyl ether, triethylene glycol diethyl ether, tetraethylene glycol dimethyl ether, tetraethylene glycol diethyl ether, propylene glycol dimethyl ether, propylene glycol diethyl ether, propylene glycol methyl ethyl ether, dipropylene glycol dimethyl ether, dipropylene glycol diethyl ether and tripropylene glycol dimethyl ether and the like.

Among the above glycol-based organic solvents, particularly preferred solvents are dialkyl ethers such as tetraethylene glycol dialkyl ether, tetraethylene glycol dimethyl ether, diethylene glycol diethyl ether and diethylene glycol methyl ethyl ether, and monoalkyl ethers such as ethylene glycol monobutyl ether acetate. Skeletons such as (poly)ethylene glycol and (poly)propylene glycol in a variety of glycol compounds raise the reactivity of 2-(2-vinyloxyethoxy)ethyl acrylate which is a polymerizable monomer, and thus it is easy to improve the curability of a coated film and reduce the occurrence of curing wrinkles by using a glycol-based organic solvent. According to an ink composition comprising a glycol-based organic solvent, it is easy to obtain low ink viscosity, excellent discharge stability and good image quality.

Furthermore, lactic acid esters such as methyl lactate, ethyl lactate, propyl lactate and butyl lactate may be also used as preferred organic solvents.

The amount of organic solvent described above is preferably 0.01 to 10 wt%, more preferably 0.01 to 5 wt% and further preferably 0.1 to 3 wt% based on the total weight of ink composition comprising an organic solvent.

### <Pigment>

The pigments which may be used in an ink composition according to the present invention may be pigments which are generally used for ink compositions for printing uses and painting uses. A pigment may be selected from well-known pigments depending on uses required such as color developing properties and light resistance. For example, achromatic color pigments such as carbon black, titanium oxide and calcium carbonate, or chromatic color organic pigments may be used as specific pigment components.

Specific examples of organic pigments include the following: insoluble azo pigments such as Toluidine Red, Toluidine Maroon, Hansa Yellow, Benzidine Yellow and Pyrazolone Red; soluble azo pigments such as Lithol Red, Helio Bordeaux, Pigment Scarlet and Permanent Red 2B; derivatives from vat dyes such as Alizarin, Indanthrone and Thioindigo maroon; phthalocyanine-based organic pigments such as Phthalocyanine Blue and Phthalocyanine Green; quinacridone-based organic pigments such as Quinacridone Red and Quinacridone Magenta; perylene-based organic pigments such as Perylene Red and Perylene Scarlet; isoindolinone-based organic pigments such as Isoindolinone Yellow and Isoindolinone Orange; pyranthrone-based organic pigments such as Pyranthrone Red and Pyranthrone Orange; thioindigo-based organic pigments; condensed azo-based organic pigments; benzimidazolone-based organic pigments; quinophthalone-based organic pigments such as Quinophthalone Yellow; isoindoline-based organic pigments such as Isoindoline Yellow; and naphthol-based organic pigments.

Furthermore, specific examples of organic pigments also include Flavanthrone Yellow, Acylamide Yellow, Nickel Azo Yellow, Copper Azomethine Yellow, Perinone Orange, Anthrone Orange, Dianthraquinonyl Red and Dioxazine Violet and the like.

Organic pigments exemplified by color index (C.I.) numbers include the following:
C.I. Pigment Yellow 12, 13, 14, 17, 20, 24, 74, 83, 86, 93, 109, 110, 117, 120, 125, 128, 129, 137, 138, 139, 147, 148, 150, 151, 153, 154, 155, 166, 168, 180 and 185;
C.I. Pigment Orange 16, 36, 43, 51, 55, 59, 61 and 64;
C.I. Pigment Red 9, 31, 48, 49, 52, 53, 57, 97, 122, 123, 146, 147, 149, 168, 177, 180, 185, 192, 202, 206, 215, 216, 217, 220, 223, 224, 226, 227, 228, 238, 240 and 269;
C.I. Pigment Violet 19, 23, 29, 30, 37, 40 and 50;
C.I. Pigment Blue 15, 15:1, 15:3, 15:4, 15:6, 22, 60 and 64;
C.I. Pigment Green 7 and 36; and
C.I. Pigment Brown 23, 25 and 26.

Specific examples of carbon black include the following:
"Special Black 350, 250, 100, 550, 5, 4, 4A and 6" and "Printex U, V, 140U, 140V, 95, 90, 85, 80, 75, 55, 45, 40, P, 60, L6, L, 300, 30, 3, 35, 25, A and G" manufactured by Orion Engineered Carbons;
"REGAL 400R, 660R, 330R and 250R", and "MOGUL E and L" manufactured by Cabot Corporation;
"MA 7, 8, 11, 77, 100, 100R, 100S, 220 and 230" and "#2700, #2650, #2600, #200, #2350, #2300, #2200, #1000, #990, #980, #970, #960, #950, #900, #850, #750, #650, #52, #50, #47, #45, #45L, #44, #40, #33, #332, #30, #25, #20, #10, #5, CF9, #95 and #260" manufactured by Mitsubishi Chemical Corporation.

Specific examples of titanium oxide include the following:
"TIPAQUE" series and "TTO" series manufactured by ISHIHARA SANGYO KAISHA, LTD.;
"TITANIX" series manufactured by TAYCA CORPORATION; and
"Ti-Pure" series manufactured by Du Pont Kabushiki Kaisha.

Among organic pigments exemplified, quinacridone-based organic pigments, phthalocyanine-based organic pigments, benzimidazolone-based organic pigments, isoindolinone-based organic pigments, condensed azo-based organic pigments, quinophthalone-based organic pigments and isoindoline-based organic pigments and the like, are preferred in terms of excellent light resistance. The organic pigments are preferably fine pigments with an average particle diameter of 10 to 200 nm as values measured by laser scattering. When using a pigment with an average particle diameter of 10 nm or more, excellent light resistance may be easily obtained. On the other hand, when using a pigment with an average particle diameter of less than 200 nm, it is easy to maintain the stabilized state of the pigment dispersed, and the pigment is not easily precipitated. The above average particle diameter means D50. For example, an ink is diluted 200 to 1000-fold with ethyl acetate, and the particle diameter can be measured by using Microtrac UPA150 (manufactured by NIKKISO CO., LTD.)

In an embodiment, it is preferred that the amount of pigment is adjusted to obtain a sufficient concentration and a sufficient light resistance of an ink composition in consideration of the desired ink characteristics. The pigments may be used individually, or two or more pigments may be used in combination. Typically, the amount of pigment contained in an ink composition is preferably 0.1 to 30 wt%, more preferably 1 to 20 wt% and further preferably 1 to 10 wt% based on the total weight of ink composition. The amount of pigment contained in an ink composition according to the present invention is not limited to the above range and may be adjusted depending on uses and image quality. For example, by reducing the amount of pigment described above, light-colored ink compositions such as light yellow, light magenta and light cyan may be formed.

An embodiment of the present invention relates to a black ink composition. In the black ink composition, carbon black is typically used as a pigment. In conventional black inks, however, the amount of carbon black is restricted to avoid a decrease in curability, and the color is reproduced by using other pigments in combination. On the other hand, according to the present invention, the curability of ink composition is improved, and thus the amount of carbon black pigment may be increased.

In an embodiment, when a black ink composition is prepared, the amount of pigment is preferably 4 wt% or more, more preferably 4 to 15 wt% and further preferably 4 to 8 wt% with respect to the total weight of ink composition. In such embodiment, the above pigment comprises preferably 60 wt% or more, more preferably 80 wt% or more and further preferably 90 wt% or more of carbon black with respect to the total weight of pigment. In an embodiment of the present invention, an ink composition with a high amount of carbon black may be thus formed. Such ink composition is excellent in terms of not only characteristics such as curability and abrasion resistance, but also being able to forming print with a high concentration and high contrast ratio at the time of printing. Therefore, the black ink composition in the above embodiment may be suitably used for example for uses such as bar code printing.

In an embodiment of a black ink composition, it is characterized in that when the average film thickness at the time of curing is 6 µm, the OD value is 1.9 or more. However, a black ink composition according to the present invention is not limited to the above embodiment, and when the OD value is within the above range, the film thickness of a cured film is intended to be optional. The film thickness of a cured film is not particularly limited and is preferably 1 µm or more and more preferably 1.5 µm or more. A film thickness of 1 µm or more is not easily affected by oxygen inhibition and it is thus easy to obtain good curability.

The OD value is measured as follows. First, for example, a cured film is formed on a non-permeable base material such as a plastic base material so that the film thickness is 6 µm. Next, measurement is carried out on any 5 points of the cured film using X-Rite 500 series manufactured by X-Rite, Inc. on the condition of status G Finally, the OD value is determined by obtaining the average of measured values. The OD value thus obtained is preferably 1.9 or more and more preferably 2.0 or more. When the OD value is 1.9 or more, print with a concentration level equal to that of existing electrophotographic printing with visual observation can be formed regardless of a type of either permeable base material or non-permeable base material. Therefore, a black ink composition according to the present invention can be suitably used for uses such as bar code printing.

A black ink composition can be prepared in accordance with the embodiment of an ink composition previously exemplified. Therefore, a black ink composition may be formed using a pigment comprising carbon black, polymerizable compounds, a photopolymerization initiator and, if needed, a sensitizer. In an embodiment, the amount of photopolymerization initiator contained in a black ink composition is preferably 3 parts by weight or more, more preferably 3 to 7 parts by weight and further preferably 4 to 7 parts by weight with respect to 1 part by weight of pigment. When the amount of photopolymerization initiator with respect to 1 part by weight of pigment is adjusted to 3 parts by weight or more, sufficient curability is easily obtained. In addition, when the above amount is adjusted to 7 parts by weight or less, the occurrence of curing wrinkles due to uneven curing is easily reduced. In particular, when the amount of photopolymerization initiator is adjusted to the above range, curing successfully proceeds even at the time of thin film printing without an influence of oxygen inhibition, and sufficient curability is easily obtained with color density high.

In a black ink composition, the amount of acyl phosphine oxide-based photopolymerization initiator is preferably 2.0 parts by weight or more, more preferably 2.1 to 5.0 parts by weight and further preferably 2.5 to 4.0 parts by weight with respect to 1 part by weight of pigment in the black ink composition. When the above amount is adjusted to 2.0 parts by weight or more, sufficient curability is obtained, and the occurrence of curing wrinkles due to uneven curing is easily suppressed.

In a black ink composition, the amount of photopolymerization initiator having a thioxanthone skeleton is preferably 0.5 to 2.0 parts by weight, more preferably 0.65 to 1.5 parts by weight and further preferably 0.7 to 1.5 parts by weight with respect to 1 part by weight of pigment in the black ink composition. When the above amount is adjusted to 0.5 parts by weight or more, curability in the case of a thin film is easily increased. In addition, when the above amount is adjusted to 2.0 parts by weight or less, deterioration in ink stability may be easily suppressed.

In a black ink composition, the amount of α-aminoacetophenone-based photopolymerization initiator is preferably 0.2 to 2.0 parts by weight, more preferably 0.45 to 1.0 part by weight and further preferably 0.5 to 0.9 parts by weight with respect to 1 part by weight of pigment in the black ink composition. When the above amount is adjusted within the above range, good curability is easily obtained without a loss of ink stability.

The photopolymerization initiator used in a black ink composition preferably comprises at least one selected from the group consisting of acyl phosphine oxide-based photopolymerization initiators, photopolymerization initiators having a thioxanthone skeleton, and α-aminoacetophenone-based photopolymerization initiators. In an embodiment, it is preferred that the above three types of photopolymerization initiator is used in combination. By using the above three types of photopolymerization initiator in combination, good curability is easily obtained even at the time of thin film printing, which is easily affected by oxygen inhibition. In addition, good curability is easily obtained even when the pigment concentration in an ink composition is high.

A black ink composition is described as an embodiment of the present invention. It should be noted however that the present invention is not limited to a black ink, and the same effects are obtained also in color inks having other colors. For example, even when a color ink comprises 10 wt% or more of acyl phosphine oxide as a photopolymerization initiator, good curability is easily obtained at the time of thin film printing.

In an embodiment, it is preferred that a pigment dispersing agent is used to improve the pigment dispersing properties and the preservation stability of an ink composition. Examples of pigment dispersing agents include hydroxy group-containing carboxylic acid esters, salts of a long chain polyaminoamide and a high molecular weight acid ester, salts of a high molecular weight polycarboxylic acid, salts of a long chain polyaminoamide and a polar acid ester, high molecular weight unsaturated acid esters, high molecular copolymers, modified polyurethanes, modified polyacrylates, polyether ester type anionic activators, salts of naphthalene sulfonate formalin condensate, salts of aromatic sulfonate formalin condensate, polyoxyethylene alkyl phosphoric acid esters, polyoxyethylene nonylphenyl ethers and stearyl amine acetate. The amount of pigment dispersing agent described above is preferably 0.01 to 10 wt%, more preferably 0.1 wt% to 10 wt% and further preferably 0.1 to 5 wt% based on the total weight of ink composition in terms of pigment dispersion stability.

Among those exemplified, pigment dispersing agents having a basic functional group are preferred, and commercial products may be used. Examples of commercial products which may be used as a pigment dispersing agent having a basic functional group include SOLSPERSE 24000GR, 32000, 33000, 35000, 39000, 41000, 53000 and J180 manufactured by The Lubrizol Corporation, and also include AJISPER PB821, 822, 824, 827 and 711 manufactured by Ajinomoto Fine-Techno Co., Inc. An embodiment of an ink composition preferably comprises at least one of the compounds exemplified as pigment dispersing agents having a basic functional group.

In an embodiment, an acid derivative of an organic pigment is preferably blended when dispersing a pigment. By using the above pigment derivative, the pigment dispersing properties and the preservation stability of an ink composition can be further improved. The above pigment derivative is a compound or a metallic salt compound which has an organic pigment as a main skeleton and which is obtained by introducing a substituent selected from a sulfonic acid, a sulfonamide group, an aminomethyl group and a phthalimidomethyl group into a side chain.

A method for adding a pigment at the time of preparing an ink composition is not particularly limited. A pigment itself may be used, or a concentrated liquid of the pigment may be used. In an embodiment, first, a pigment is dispersed with components, i.e. polymerizable compounds, a pigment dispersing agent, a pigment and additives, using a normal disperser such as a sand mill to prepare a concentrated liquid with a high pigment concentration, and the above concentrated liquid is then diluted with an additional polymerizable compound. This is a preferred method. According to this method, sufficient dispersion can be carried out even using a normal disperser. In addition, an excess of energy is not applied to a pigment, and a lot of dispersing time is not required. Therefore, the quality of raw materials is not changed during dispersing treatment, and an ink composition with excellent stability may be produced.

The ink composition of the present invention can comprise, if needed, additives such as a surface conditioner, a levelling agent, an ultraviolet absorber and an antioxidant to increase printability and resistance of printed materials.

In an embodiment, it is preferred that a surface conditioner is used. Examples of surface conditioner include silicone-based, fluorine-based, acrylic-based, acetylene glycol-based and vinyl-based surface conditioner and the like. It is preferred that a silicone-based surface conditioner is used in terms of an ability of reducing surface tension, and compatibility with polymerizable monomers.

Specific silicone-based surface conditioner includes modified products having a dimethylsiloxane skeleton, and among these, polyether-modified siloxane-based surface tension regulators are preferred. Polyether indicates for example polyethylene oxide and polypropylene oxide. As general products, polyether-modified siloxanes such as BYK (registered trademark)-378, 348 and 349 and polyether-modified polydimethylsiloxanes such as BYK-UV3500 and UV3510 as typical products from BYK Chemie, and polyether-modified silicone-based surfactants such as polyether-modified siloxane copolymers such as TEGO (registered trademark) GLIDE 450, 440, 435, 432, 410, 406, 130, 110 and 100 from Evonik Degussa can be preferably used. Among these, polyether-modified silicone-based surface tension regulators such as BYK-378, 348, UV3510, TEGO Glide 450, 440, 432 and 410 are preferred from the viewpoint of compatibility with polymerizable monomers and good image quality formation.

The amount of surface conditioner is preferably 0.2 to 5.0 wt%, more preferably 0.2 to 5 wt% and further preferably 0.5 to 3 wt% based on the total weight of ink composition. When the amount is 0.2 wt% or more, because the wettability of an ink into a base material can be improved, sufficient solid filling properties can be secured even when the discharge amount is small, and good images can be thus obtained. On the other hand, when the above amount is 5.0 wt% or less, the preservation stability of an ink can be secured.

In particular, the amount of surface regulator contained in a black ink composition is preferably 0.5 to 5.0 wt% and more preferably 1.0 to 5.0 wt% based on the total weight of ink. In the above range, sufficient solid filling properties can be secured even when the discharge amount is small, and color density is improved.

The ink composition of the present invention can be prepared in accordance with a well-known method. An ink composition containing polymerizable compounds, a stabilizing agent, a photopolymerization initiator, additives and a coloring agent, for example, can be produced by adding the components to a pigment concentrated liquid previously prepared by dispersing the pigment and mixing the obtained mixture, and dissolving a photopolymerization initiator therein. In this case, in order to prevent head clogging at the time of printing, an ink composition is preferably filtered through a filter with a hole diameter of 3 µm or less and preferably a hole diameter of 1 µm or less after the photopolymerization initiator is dissolved.

In an embodiment, the ink composition of the present invention has preferably a viscosity of 5 to 50 mPa·s at 25°C and more preferably 5 to 30 mPa·s. By adjusting the viscosity of an ink composition to the above range, stable discharge characteristics can be obtained particularly in not only a normal head having a frequency of 5 to 30 KHz but also a head having a high frequency of 10 to 50 KHz. More specifically, when the viscosity of an ink composition is 5 mPa·s or more, a decline in discharge followability does not easily occur even in a head having a high frequency. On the other hand, when the viscosity is 50 mPa·s or less, even if a mechanism of decreasing viscosity by heating is incorporated into a head, a decline in discharge itself occurs, and discharge stability becomes bad, and a problem in that discharge cannot be carried out at all does not easily occur.

A method for using the ink composition of the present invention is not particularly limited, and the ink composition of the present invention may be used as an ink of normal inkjet recording printers. A typical method comprises the step of supplying the ink composition to a printer head of an inkjet recording printer, the step of discharging the ink composition on a base material from the printer head, and then the step of irradiating active energy rays such as ultraviolet rays or an electron beam to the ink composition on the base material. By irradiating active energy rays, the ink composition on the base material is quickly cured and a printed surface is formed.

In an embodiment, ultraviolet rays are preferably irradiated as an active energy ray light source. In this case, for example, a high-pressure mercury lamp, a metal halide lamp, a low pressure mercury lamp, a super high-pressure mercury lamp, an ultraviolet ray laser, a gallium lamp, an LED and sunlight may be used as a light source.

The ultraviolet rays are preferably in a range from 350 nm to 450 nm. In addition, the volume of ultraviolet ray irradiated is preferably 10 mJ/cm² or more and 10000 mJ/cm² or less. In particular, according to the ink composition of the present invention, because acyl phosphine oxide solubility is improved, the amount of photopolymerization initiator contained in the ink composition can be sufficiently increased. Therefore, even when the volume of ultraviolet ray irradiated is low, sufficient curability is expected to be obtained. Therefore, even when using either a metal halide lamp or an LED lamp which is generally widely used, sufficient curability can be obtained.

A print base material used in the present invention can be a variety of base materials made of various materials. Although it is not particularly intended to be limited, examples of the base material include plastic base materials such as polycarbonate, rigid polyvinyl chloride, plasticized polyvinyl chloride, polystyrene, styrene foam, PMMA, polypropylene, polyethylene and PET, mixed or modified products thereof, paper base materials such as high quality paper, art paper, coated paper and cast-coated paper, glass, and metal base materials such as stainless.

The ink composition of the present invention has high curability, and is thus sufficiency cured without the occurrence of curing wrinkles even in a thick film printing, and printed images with high image quality can be provided. Therefore, the ink composition may be used for not only general non-permeable base materials such as plastics but also permeable base materials such as paper and wood. In particular, the ink composition may be used also for vinyl chloride acetate for outdoor advertising uses and an MDF base material for building uses as new markets, and thus is expected to be used in various markets.

### EXAMPLES

The embodiments of the present invention will now be described in detail by way of Examples and Comparative Examples thereof. It should be noted however that the present invention is not limited to the following examples. All of the number of parts described below represent parts by weight.

The components used in Examples and Comparative Examples are as follows.
- Cyan pigment: C.I. Pigment Blue 15:3 ("Lionol Blue 7351" manufactured by TOYOCOLOR CO., LTD.)
- Magenta pigment: C.I. Pigment Red 122 ("Hostaperm Pink E" manufactured by Clariant)
- Yellow pigment: C.I. Pigment Yellow 180 ("Novoperm Yellow P-HG" manufactured by Clariant)
- Black pigment: Carbon black ("Special Black 350" manufactured by Evonik Degussa)
- Pigment dispersing agent: basic pigment dispersing resin "SOLSPERSE 32000" (manufactured by The Lubrizol Corporation)
- DPGDA: dipropylene glycol diacrylate (manufactured by BASF)
- PEA: 2-phenoxyethyl acrylate
- VEEA: 2-(2-vinyloxyethoxy)ethyl acrylate ("VEEA" manufactured by NIPPON SHOKUBAI CO., LTD.)
- DPHA: dipcntaerythritol hexaacrylate (manufactured by TOAGOSEI CO., LTD.)
- LA: lauryl acrylate (manufactured by Osaka Organic Chemical Industry Ltd.)
- TPO: 2,4,6-trimethylbenzoyl-diphenylphosphine oxide ("Darocur TPO" manufactured by BASF)
- Irg819: bis(2,4,6-trimethylbenzoyl)-phenylphosphine oxide ("IRGACURE 819" manufactured by BASF)
- EAB: 4,4'-diethylamino benzophenone (manufactured by Daido Chemical Corporation)
- ITX: 2-isopropylthioxanthone
- Irg379: 2-(dimethylamino)-2-[(4-methylphenyl)methyl]-1-[4-(4-morpholinyl)phenyl]-1-butanon e ("IRGACURE 379" manufactured by BASF)
- Esacure one: oligo[2-hydroxy-2-methyl-1-{4-(1-methylvinyl)phenyl}propanone] (manufactured by Lamberti)
- DEDG: diethylene glycol diethyl ether ("DEDG" manufactured by Nippon Nyukazai Co., Ltd.)
- Phenothiazine: "Phenothiazine" manufactured by Seiko Chemical Co., Ltd.
- BHT: "H-BHT" manufactured by Honshu Chemical Industry Co., Ltd.
- UV3510: polyether-modified polydimethylsiloxane "BYK-UV3510" manufactured by BYK Chemie
- TEGO Glide 432: polyether-modified polydimethylsiloxane "TEGO Glide 432" manufactured by Evonik Industries
- TEGO Glide 450: polyether-modified polydimethylsiloxane "TEGO Glide 450" manufactured by Evonik Industries

### 1. Preparation of Pigment Dispersion

A cyan pigment, a pigment dispersing agent and DPGDA were used in the blending ratio shown in Table 1, and these components were stirred to be uniform with e.g. a high speed mixer to obtain a millbase. Next, the obtained millbase was dispersed by a horizontal sand mill for about an hour to prepare a pigment dispersion 1,

The pigment dispersions 2 to 4 were prepared by the same method as above except that the cyan pigment was changed to other pigments shown in Table I.

**[Table 1]**

| | Dispersion 1 | Dispersion 2 | Dispersion 3 | Dispersion 4 |
|---|---|---|---|---|
| Cyan pigment | 15.0 | | | |
| Magenta pigment | | 15.0 | | |
| Yellow pigment | | | 15.0 | |
| Black pigment | | | | 15.0 |
| Pigment dispersing agent | 7.5 | 7.5 | 7.5 | 7.5 |
| DPGDA | 77.5 | 77.5 | 77.5 | 77.5 |

### 2. Preparation of Ink Compositions

### (Example 1)

To the pigment dispersion 1 previously prepared, other materials described in Table 2 were successively added with stirring and mixed, and the obtained mixture was gently mixed until a photopolymerization initiator was dissolved to obtain a mixed liquid. After that, coarse particles were removed by filtering the above mixed liquid through a membrane filter with a hole diameter of 1 µm to prepare an ink composition.

### (Examples 2 to 25 and Comparative Examples 1 to 5)

Each ink composition was prepared using components described in Table 2 to Table 4 in the same manner as in Example 1.

### (Examples 26 to 43 and Comparative Examples 6 and 7)

To a pigment dispersion previously prepared, other materials described in Table 5 and Table 6 were successively added with stirring, and the obtained mixture was gently mixed until a photopolymerization initiator was dissolved to obtain a mixed liquid. After that, coarse particles were removed by filtering the above mixed liquid through a membrane filter with a hole diameter of 1 µm to prepare a black ink composition.

### 3. Evaluation of Ink Compositions

The evaluation items and methods thereof are as follows.

### (Curability (metal halide))

Using ink compositions produced in Examples and Comparative Examples, printing was carried out by an inkjet discharge device equipped with a head (KJ4A) manufactured by KYOCERA Corporation. Specifically, an ink composition was discharged on a base material under the printing conditions of an ink droplet volume of 14 pl and 600 x 600 dpi to form a coated film. Next, the base material was moved while irradiating ultraviolet rays with a metal halide lamp manufactured by HARISON TOSHIBA LIGHTING Corporation at 140 W/cm and a conveyor velocity of 25 to 50 m/min for 1 Pass, and the coated film was cured to obtain a cured film. Printing velocities were changed and printing was carried out, and the degree of curability was determined from a printing velocity at which 100 % solid printed portion was cured for 1 Pass. The printed material was examined by touch. The state in which an ink was not attached to hands was determined as the completion of curing.

The cured state of the printed material was evaluated in accordance with the following criteria. A value of 3 or more is considered as good curability. As a print base material, PETK2411 (manufactured by LINTEC Corporation) was used.

### (Evaluation Criterion)

5: Cured at 50 m/min,
4: Cured at 40 m/min or more and less than 50 m/min,
3: Cured at 30 m/min or more and less than 40 m/min,
2: Cured at 20 m/min or more and less than 30 m/min, and
1: Not cured at 10 m/min.

### (Curability (LED))

A printed material was evaluated in the same manner as in the above curability (metal halide) except that the metal halide lamp in the above curability (metal halide) evaluation was changed to an LED lamp (385 nm, an integrated light amount of 566 mW/cm² at 10 m/sec) manufactured by Integration Technology.

### (Evaluation of Curing Wrinkles and Odor)

Printing was carried out using the same device and base material in the above curability (metal halide) evaluation under the conditions of an ink droplet volume of 14 pl, 600 x 600 dpi, 100% solid printing and a conveyor velocity of 30 m/min, and the obtained printed material was evaluated.

### (Evaluation of Curing Wrinkles)

The printed material was visually observed and evaluated in accordance with the following criteria. An evaluation of 3 or more is considered as acceptance.

### (Evaluation Criterion)

5: No curing wrinkles, and glossy,
4: The area on which curing wrinkles occur is less than 10%,
3: The area on which curing wrinkles occur is 10% or more and less than 20%, and
2: Curing wrinkles occur on 20% or more of area.

### (Evaluation of Odor)

Printed materials after printing were checked by 10 people, and evaluated by the number of people who determined that a printed material had odor as follows. An evaluation of 3 or more is considered as acceptance.

### (Evaluation Criterion)

5: The number of people who determined that a printed material had odor is 0,
4: The number of people who determined that a printed material had odor is 1 or 2,
3: The number of people who determined that a printed material had odor is 3 to 5, and
2: The number of people who determined that a printed material had odor is 6 or more.

### (Evaluation of Dot Diameter)

About the ink compositions prepared in Examples and Comparative Examples, printing was carried out using the same device and base material in the above curability (metal halide) evaluation under the conditions of an ink droplet volume of 14 pl, 600 x 600 dpi, 10% printing and a conveyor velocity of 30 m/min. The dot diameter of a printed material was measured and evaluated in accordance with the following criteria. A score of 3 or more is considered as acceptance. A greater dot diameter indicates better 100% solid images, which is preferred.

### (Evaluation Criterion)

5: 150 µm or more,
4: 140 µm or more and less than 150 µm,
3: 130 µm or more and less than 140 µm, and
2: less than 130 µm.

### (Concentration at Film Thickness of 6 µm)

About the black ink compositions prepared in Examples 26 to 43 and Comparative Examples 6 and 7, the OD value of a cured film created in the above curability (metal halide) evaluation test was measured. Specifically, the measurement was carried out on any 5 points of 100% solid printed portion on the cured film using X-Rite 500 series manufactured by X-Rite, Inc. on the condition of status G, and the average value was obtained.

The composition and evaluation results of the ink compositions prepared in Examples and Comparative Examples are shown in Tables 2 to 6.

**[Table 2]**

| | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Dispersion 1 | 150 | 15.0 | 15.0 | | | | | | | | | |
| Dispersion 2 | | | | 15.0 | 15.0 | | | | | | | |
| Dispersion 3 | | | | | | 15.0 | 15.0 | | | | 15.0 | 15.0 |
| Dispersion 4 | | | | | | | | 15.0 | 15.0 | 15.0 | | |
| DPGDA | 10.0 | 10.0 | 10.0 | 5.0 | 58.1 | 10.0 | 10.0 | 200 | 50.0 | 20.0 | 200 | 35.0 |
| VEEA | 52.4 | 52.4 | 49.4 | 47.4 | 5.0 | 54.4 | 57.4 | 37.4 | 12.1 | 41.4 | 37.4 | 30.4 |
| DPHA | 5.0 | 5.0 | 5.0 | 5.0 | 5.0 | 5.0 | | 50 | 5.0 | | | |
| LA | | | | 10.0 | | | | | | | | |
| PEA | | | | | | | | | | | | |
| TPO | 11.0 | 5.0 | 5.0 | 11.0 | 10.3 | 15.0 | | 15.0 | 10.3 | 12.0 | 16.0 | 12.0 |
| Irg819 | | 6.0 | 6.0 | | | | 11.0 | | | 4.0 | 4.0 | |
| EAB | | | | 3.0 | | | | | | | | |
| ITX | 3.0 | 3.0 | 6.0 | | 3.0 | | 3.0 | 80 | 6.0 | | | 3.0 |
| Irg379 | 3.0 | 3.0 | 3.0 | 3.0 | 3.0 | | 3.0 | 3.0 | | 3.0 | 3.0 | 3.0 |
| Esacure one | | | | | | | | | | 3.0 | 3.0 | |
| DEDG | | | | | | | | 1.0 | 1.0 | 1.0 | 1.0 | 1.0 |
| Phenothiazine | 0.1 | 0.1 | 0.1 | 0.1 | 0.1 | 0.1 | 0.1 | 0.1 | 0.1 | 0.1 | 0.1 | 0.1 |
| UV3510 | 0.5 | 0.5 | 0.5 | 0.5 | 0.5 | 0.5 | 0.5 | 0.5 | 0.5 | 0.5 | 0.5 | 0.5 |
| Total | 100.0 | 100.0 | 100.0 | 100.0 | 1000 | 100.0 | 1000 | 100.0 | 100.0 | 100.0 | 100.0 | 100.0 |
| DPGDA ratio | 21.6 | 21.6 | 21.6 | 16.6 | 69.7 | 21.6 | 21.6 | 31.6 | 61.6 | 31.6 | 31.6 | 46.6 |
| VEEA ratio | 52.4 | 52.4 | 49.4 | 47.4 | 5.0 | 54.4 | 57.4 | 37.4 | 12.1 | 41.4 | 37.4 | 30.4 |
| Acyl ratio | 11.0 | 11.0 | 11.0 | 11.0 | 10.3 | 15.0 | 11.0 | 15.0 | 10.3 | 16.0 | 20.0 | 12.0 |
| Curability (metal halide) | 5 | 5 | 5 | 4 | 3 | 5 | 4 | 5 | 5 | 5 | 5 | 5 |
| Curability (LED) | 5 | 4 | 5 | 4 | 3 | 4 | 3 | 5 | 5 | 5 | 5 | 5 |
| Curing wrinkles | 5 | 4 | 4 | 5 | 5 | 5 | 3 | 5 | 5 | 5 | 5 | 5 |
| Odor | 5 | 5 | 5 | 5 | 5 | 5 | 5 | 4 | 5 | 4 | 4 | 5 |
| Dot diameter | 5 | 4 | 4 | 3 | 5 | 5 | 4 | 4 | 5 | 4 | 5 | 5 |

**[Table 3]**

| | Example 13 | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|
| Dispersion 1 | | | | | | | | | | | | | |
| Dispersion 2 | | | | | | | | | | | | | |
| Dispersion 3 | 15.0 | 15.0 | 15.0 | 15.0 | | | | | | | | | |
| Dispersion 4 | | | | | 15.0 | 15.0 | 15.0 | 15.0 | 15.0 | 15.0 | 15.0 | 15.0 | 15.0 |
| DPGDA | 35.0 | 35.0 | 35.0 | 35.0 | 52.4 | 52.3 | 51.4 | 47.4 | 45.4 | 49.4 | 53.4 | 43.4 | 44.4 |
| VEEA | 31.3 | 26.4 | 24.4 | 21.4 | 9.0 | 9.0 | 9.0 | 9.0 | 9.0 | 9.0 | 9.0 | 9.0 | 9.0 |
| DPHA | | | | | 3.0 | 3.0 | 3.0 | 3.0 | 3.0 | 3.0 | 3.0 | 3.0 | 3.0 |
| LA | | | | | | | | | | | | | |
| PEA | | | | | | | | | | | | | |
| TPO | 12.0 | 12.0 | 12.0 | 12.0 | 16.0 | 16.0 | 16.0 | 16.0 | 16.0 | 16.0 | 16.0 | 16.0 | 18.0 |
| Irg819 | | | | | | | | | | | | | |
| EAB | | | | | | | | | | | | | 6.0 |
| ITX | 3.0 | 3.0 | 3.0 | 3.0 | | | | | | | | 6.0 | |
| Irg379 | 3.0 | 3.0 | 3.0 | 3.0 | 3.0 | 30 | 3.0 | 3.0 | 3.0 | 5.0 | 1.0 | | |
| Irg369 | | | | | | | | | | | | 30 | |
| Esacure one | | | | | 1.0 | 1.0 | 1.0 | 1.0 | 1.0 | 1.0 | 1.0 | 3.0 | 3.0 |
| DEDG | 0.1 | 5.0 | 7.0 | 10.0 | | 0.1 | 1.0 | 5.0 | 7.0 | 1.0 | 1.0 | 1.0 | 1.0 |
| Phenothiazine | 0.1 | 0.1 | 0.1 | 0.1 | 0.1 | 0.1 | 0.1 | 0.1 | 0.1 | 0.1 | 0.1 | 0.1 | 0.1 |
| UV3510 | 0.5 | 0.5 | 0.5 | 0.5 | 0.5 | 0.5 | 0.5 | 0.5 | 0.5 | 0.5 | 0.5 | 0.5 | 0.5 |
| Total | 100.0 | 100.0 | 100.0 | 100.0 | 100.0 | 100.0 | 100.0 | 100.0 | 100.0 | 100.0 | 100.0 | 100.0 | 100.0 |
| DPGDA ratio | 46.6 | 46.6 | 46.6 | 46.6 | 64.0 | 63.9 | 63.0 | 59.0 | 57.0 | 61.0 | 65.0 | 55.0 | 560 |
| VEEA ratio | 31.3 | 26.4 | 24.4 | 21.4 | 9.0 | 9.0 | 9.0 | 9.0 | 9.0 | 9.0 | 9.0 | 9.0 | 9.0 |
| Acyl ratio | 12.0 | 12.0 | 12.0 | 12.0 | 16.0 | 16.0 | 16.0 | 10.0 | 16.0 | 160 | 16.0 | 16.0 | 18.0 |
| Curability (metal halide) | 4 | 5 | 4 | 3 | 3 | 4 | 5 | 5 | 4 | 5 | 4 | 5 | 4 |
| Curability (LED) | 4 | 5 | 4 | 3 | 3 | 4 | 5 | 5 | 4 | 5 | 4 | 5 | 4 |
| Curing wrinkles | 5 | 5 | 5 | 4 | 5 | 5 | 5 | 5 | 4 | 5 | 5 | 4 | 3 |
| Odor | 5 | 5 | 5 | 5 | 5 | 5 | 5 | 5 | 5 | 5 | 5 | 4 | 4 |
| Dot diameter | 5 | 5 | 5 | 5 | 5 | 5 | 5 | 5 | 5 | 5 | 5 | 4 | 4 |

**[Table 4]**

| | Comparative Example 1 | Comparative Example 2 | Comparative Example 3 | Comparative Example 4 | Comparative Example 5 |
|---|---|---|---|---|---|
| Dispersion 1 | 15.0 | 15.0 | | | |
| Dispersion 2 | | | | 15.0 | 15.0 |
| Dispersion 3 | | | | | |
| Dispersion 4 | | | 15.0 | | |
| DPGDA | 10.0 | 18.0 | 10.0 | 3.5 | 30.0 |
| VEEA | 60.4 | 29.9 | 2.4 | 34.9 | 37.4 |
| DPHA | | | 5.0 | 5.0 | 5.0 |
| LA | | | | | |
| PEA | | 25.0 | 50.0 | 30.0 | |
| TPO | 8.0 | 10.0 | 11.0 | 5.0 | |
| Irg819 | | | | | 6.0 |
| EAB | | | | 3.0 | |
| ITX | 3.0 | 2.0 | 3.0 | | |
| Irg379 | 3.0 | | 3.0 | 3.0 | 3.0 |
| Esacure one | | | | | 3.0 |
| DEDG | | | | | |
| Phenothiazine | 0.1 | 0.1 | 0.1 | 0.1 | 0.1 |
| UV3510 | 0.5 | | 0.5 | 0.5 | 0.5 |
| Total | 100.0 | 100.0 | 100.0 | 100.0 | 100.0 |
| DPGDA ratio | 21.6 | 29.6 | 10.0 | 15.1 | 41.6 |
| VEEA ratio | 60.4 | 29.9 | 2.4 | 34.9 | 37.4 |
| Acyl ratio | 8.0 | 10.0 | 11.0 | 5.0 | 6.0 |
| Curability (metal halide) | 3 | 3 | 3 | 2 | 2 |
| Curability (LED) | 2 | 2 | 3 | 1 | 1 |
| Curing wrinkles | 3 | 2 | 5 | 3 | 2 |
| Odor | 5 | 2 | 2 | 2 | 5 |
| Dot diameter | 2 | 2 | 2 | 2 | 5 |

**[Table 5]**

| | Example 26 | Example 27 | Example 28 | Example 29 | Example 30 | Example 31 | Example 32 | Example 33 | Example 34 | Example 35 Example 36 | | Example 37 |
|---|---|---|---|---|---|---|---|---|---|---|---|---|
| Dispersion 1 | | | | 6 0 | 3.0 | 1.5 | | | | | | |
| Dispersion 2 | | | 60 | | 3.0 | 1.5 | | | | | | |
| Dispersion 4 | 30.0 | 27.0 | 24.0 | 24.0 | 24.0 | 30.0 | 50.0 | 30.0 | 800 | 30.0 | 30.0 | 300 |
| DPGDA | 23.9 | 29.9 | 23.9 | 23.9 | 23.9 | 20.9 | | 13.6 | 29.3 | 23.1 | 23.9 | 23.9 |
| VEEA | 23.0 | 20.0 | 23.0 | 23.0 | 23.0 | 23.0 | 19.4 | 23.0 | 23.0 | 23.0 | 23.0 | 23.0 |
| DPHA | | | | | | | | | | | | |
| PEA | | | | | | | | | | | | |
| TPO | 13.0 | 13.0 | 13.0 | 13.0 | 13.0 | 13.0 | 18.5 | 19.5 | 10.0 | 10.0 | 14.5 | 13.9 |
| ITX | 4.5 | 4.5 | 4.5 | 45 | 4.5 | 4.5 | 6.0 | 6.8 | 3.0 | 6.8 | 3.0 | 4.5 |
| Irg379 | 3.0 | 30 | 30 | 3.0 | 3.0 | 3.0 | 3.5 | 4.5 | 2.1 | 4.5 | 3.0 | 2.1 |
| DEDG | | | | | | | | | | | | |
| Phenothiazine | 0.1 | 0.1 | 0.1 | 0.1 | 0.1 | 0.1 | 0.1 | 0.1 | 0.1 | 0.1 | 0.1 | 0.1 |
| BHT | 0.5 | 0.5 | 0.5 | 05 | 0.5 | 0.5 | 0.5 | 0.5 | 0.5 | 0.5 | 0.5 | 0.5 |
| Joncryl 586 | | | | | | | | | | | | |
| TEGO Glide 432 | 1.0 | 1.0 | 1.0 | 1.0 | 1.0 | 1.0 | 1.0 | 1.0 | 1.0 | 1.0 | 1.0 | 1.0 |
| TEGO Glide 450 | 1.0 | 10 | 1.0 | 1.0 | 1.0 | 1.0 | 1.0 | 1.0 | 1.0 | 1.0 | 1.0 | 1.0 |
| Total | 100.0 | 100.0 | 100.0 | 100.0 | 1000 | 100.0 | 100.0 | 100.0 | 100.0 | 100.0 | 100.0 | 100.0 |
| Curability (metal halide) | 5 | 5 | 5 | 5 | 5 | 5 | 3 | 5 | 3 | 3 | 5 | 4 |
| Curability (LED) | 5 | 5 | 5 | 5 | 5 | 5 | 3 | 5 | 3 | 5 | 3 | 4 |
| Curing wrinkles | 5 | 5 | 5 | 5 | 5 | 5 | 3 | 3 | 3 | 3 | 5 | 4 |
| Odor | 5 | 5 | 5 | 5 | 5 | 5 | 4 | 4 | 4 | 4 | 4 | 4 |
| OD value (film thickness 6 µm) | 2.10 | 1.92 | 1.98 | 1.92 | 1.95 | 2.17 | 2.30 | 2.10 | 2.10 | 2.10 | 2.10 | 2.10 |

**[Table 6]**

| | Example 38 | Example 39 | Example 40 | Example 41 | Example 42 | Example 43 | Comparative Example 6 | Comparative Example 7 |
|---|---|---|---|---|---|---|---|---|
| Dispersion 1 | | | | | | | | |
| Dispersion 2 | | | | | | | | |
| Dispersion 4 | 30.0 | 30.0 | 30.0 | 30.0 | 30.0 | 30.0 | 25.0 | 30.0 |
| DPGDA | 18.9 | 17.9 | 24.9 | 21.9 | 20.9 | 25.0 | | |
| VEEA | 23.0 | 24.0 | 21.0 | 24.0 | 24.0 | 23.0 | 22.4 | 22.4 |
| DPHA | | 5.0 | | | | | 5.0 | 5.0 |
| PEA | 5.0 | | | | | | 30.0 | 25.0 |
| TPO | 13.0 | 13.0 | 13.0 | 13.0 | 13.0 | 13.0 | 10.0 | 10.0 |
| ITX | 4.5 | 4.5 | 4.5 | 4.5 | 4.5 | 4.5 | 3.0 | 3.0 |
| Irg379 | 3.0 | 3.0 | 3.0 | 3.0 | 3.0 | 3.0 | 3.0 | 3.0 |
| DEDG | | | 1.0 | | 1.0 | | | |
| Phenothiazine | 0.1 | 0.1 | 0.1 | 0.1 | 0.1 | 0.1 | 0.1 | 0.1 |
| BHT | 0.5 | 0.5 | 0.5 | 0.5 | 0.5 | 0.5 | 0.5 | 0.5 |
| Joncryl 586 | | | | 1.0 | 1.0 | | | |
| TEGO Glide 432 | 1.0 | 1.0 | 1.0 | 1.0 | 1.0 | 0.4 | 0.5 | 0.5 |
| TEGO Glide 450 | 1.0 | 1.0 | 1.0 | 1.0 | 1.0 | 0.5 | 0.5 | 0.5 |
| Total | 100.0 | 100.0 | 100.0 | 100.0 | 100.0 | 100.0 | 100.0 | 100.0 |
| Curability (metal halide) | 4 | 5 | 4 | 5 | 4 | 5 | 3 | 3 |
| Curability (LED) | 4 | 5 | 4 | 5 | 4 | 5 | 3 | 3 |
| Curing wrinkles | 4 | 5 | 4 | 5 | 4 | 5 | 3 | 3 |
| Odor | 3 | 5 | 4 | 5 | 4 | 5 | 2 | 2 |
| OD value (film thickness 6 µm) | 2.10 | 2.10 | 2.10 | 2.10 | 2.10 | 1.91 | 1.75 | 1.80 |

Examples 1 to 25 in Table 2 and Table 3, and Comparative Examples 1 to 5 in Table 4 relate to an embodiment of a variety of color ink compositions. Examples 1 to 25 in Table 2 and Table 3 relate to an embodiment which comprises 2-(2-vinyloxyethoxy)ethyl acrylate and 16 wt% or more of dipropylene glycol diacrylate and 10 wt% or more of acyl phosphine oxide-based photopolymerization initiator in an ink composition. According to such embodiment, good results can be obtained about all of curability, odor, curing wrinkles and image quality (dot diameter).

Among these, Examples 7, 10 to 12 and 13 to 16 relate to an embodiment in which polymerizable compounds in an ink composition are formed by only 2-(2-vinyloxyethoxy)ethyl acrylate and dipropylene glycol diacrylate. In addition, Examples 1 to 6, 8, 9 and 17 to 25 relate to an embodiment in which the polymerizable compounds in an ink composition comprise: 2-(2-vinyloxyethoxy)ethyl acrylate and dipropylene glycol diacrylate; and aliphatic ethylenically polymerizable compounds not having an aromatic ring as a polymerizable compound other than the above compounds. In addition, Examples 8 to 16 and 18 to 25 relate to an embodiment in which an ink composition comprises an organic solvent.

On the other hand, Comparative Examples 1, 4 and 5 in Table 4 relate to an embodiment in which the amount of acyl phosphine oxide contained in an ink composition is less than 10 wt%. In the case of such embodiment, it is found that curability is insufficient and curing wrinkles occur. In addition, even when the amount of acyl phosphine oxide is 10 wt% or more as seen in Comparative Example 3, initiator solubility is insufficient in an amount of less than 16 wt% of dipropylene glycol diacrylate. Therefore, discharge stability is poor, and the deformation of dot diameter occurs, and it is difficult to obtain sufficient dot diameter. Furthermore, when a (meth)acrylate having an aromatic ring was used as seen in Comparative Examples 2 and 3, a decline in characteristics was observed in that odor is felt and sufficient curability is not obtained.

Examples 26 to 43 and Comparative Examples 6 and 7 in Table 5 and Table 6 relate to an embodiment of a black ink composition. From the comparison of the results of Examples 26 to 43 and Comparative Example 6 and 7, it is found that a black ink composition having a high concentration and high curability can be provided, in accordance with an embodiment which comprises 80 wt% or more of aliphatic ethylenically polymerizable compounds based on the total weight of the polymerizable compound, and comprises 4.0 wt% or more of pigment with respect to the total weight of the ink composition, and further comprises 60 wt% or more of carbon black with respect to the total weight of the pigment.

Among these, from the results of Examples 32 to 37 in Table 5, it is found that a black ink composition having a high concentration and high curability can be provided, in accordance with embodiment which contains 3 to 7 parts by weight of polymerization initiator with respect to 1 part by weight of pigment contained in an ink composition.

In addition, from the results of Examples 38 and 39 in Table 6, also in the case of an embodiment which uses 2-(2-vinyloxyethoxy)ethyl acrylate and dipropylene glycol diacrylate as polymerizable compounds, and further uses a monofunctional or polyfunctional (meth)acrylate, it is found that a black ink composition in which curability is good and the occurrence of curing wrinkles is suppressed, can be provided. Particularly, when the ink contains a polyfunctional (meth)acrylate, it is good in terms of curability and curing wrinkles.

In addition, from Example 26 (Table 5) and Example 43 (Table 6), in the case of an embodiment which comprises 1.0 wt% or more of surface conditioner with respect to the total weight of ink composition, the spreading properties of an ink to a base material are improved and a black ink composition having a high OD value is obtained.

## Claims

1. An active energy ray-curable inkjet ink composition containing a pigment, a polymerizable compound, and a photopolymerization initiator,
wherein the polymerizable compound comprises 80 wt% or more of aliphatic ethylenically polymerizable compounds based on the total weight of the polymerizable compound, wherein the aliphatic ethylenically polymerizable compounds comprise polyfunctional (meth)acrylates including at least 2-(2-vinyloxyethoxy)ethyl acrylate and dipropylene glycol diacrylate,
the photopolymerization initiator comprises an acyl phosphine oxide wherein the acyl phosphine oxide comprises a monoacyl phosphine oxide and the amount of the monoacyl phosphine oxide based on the total weight of acyl phosphine oxide is 70 wt% or more, and
the amount of the dipropylene glycol diacrylate is 16 wt% or more and the amount of the acyl phosphine oxide is 10.3 wt% or more with respect to the total weight of the inkjet ink composition.

2. The active energy ray-curable inkjet ink composition according to Claim 1, further comprising a glycol-based organic solvent, wherein the amount of the glycol-based organic solvent is 0.01 to 10 wt% based on the total weight of the ink composition.

3. The active energy ray-curable inkjet ink composition according to Claim 1 or 2, wherein the photopolymerization initiator further comprises an a-aminoacetophenone-based polymerization initiator.

4. The active energy ray-curable inkjet ink composition according to any one of Claims 1 to 3, wherein the photopolymerization initiator further comprises a photopolymerization initiator having a thioxanthone skeleton.

5. The active energy ray-curable inkjet ink composition according to any one of Claims 1 to 4, wherein the aliphatic ethylenically polymerizable compounds further comprises other polyfunctional (meth)acrylates.

6. The active energy ray-curable inkjet ink composition according to any one of Claims 1 to 5, wherein the amount of the pigment is 4.0 wt% or more with respect to the total weight of the inkjet ink composition, and the pigment comprises 60 wt% or more of carbon black with respect to the total weight of the pigment.

## Patentansprüche

1. Durch aktive Energiestrahlen härtbare Tintenstrahltintenzusammensetzung, die ein Pigment, eine polymerisierbare Verbindung und einen Photopolymerisationsinitiator enthält,
wobei die polymerisierbare Verbindung 80 Gew.-% oder mehr aliphatische, ethylenisch polymerisierbare Verbindungen, bezogen auf das Gesamtgewicht der polymerisierbaren Verbindung, umfasst, wobei die aliphatischen, ethylenisch polymerisierbaren Verbindungen polyfunktionelle (Meth)acrylate, einschließlich mindestens 2-(2-Vinyloxyethoxy)ethylacrylat und Dipropylenglykoldiacrylat, umfassen,
der Photopolymerisationsinitiator ein Acylphosphinoxid umfasst, wobei das Acylphosphinoxid ein Monoacylphosphinoxid umfasst und die Menge des Monoacylphosphinoxids, bezogen auf das Gesamtgewicht des Acylphosphinoxids, 70 Gew.-% oder mehr beträgt, und
die Menge des Dipropylenglykoldiacrylats 16 Gew.-% oder mehr und die Menge des Acylphosphinoxids 10,3 Gew.-% oder mehr in Bezug auf das Gesamtgewicht der Tintenstrahltintenzusammensetzung beträgt.

2. Die durch aktive Energiestrahlen härtbare Tintenstrahltintenzusammensetzung nach Anspruch 1, die weiterhin ein organisches Lösungsmittel auf Glykolbasis umfasst, wobei die Menge des organischen Lösungsmittels auf Glykolbasis 0,01 bis 10 Gew.-%, bezogen auf das Gesamtgewicht der Tintenzusammensetzung, beträgt.

3. Die durch aktive Energiestrahlen härtbare Tintenstrahltintenzusammensetzung nach Anspruch 1 oder 2, wobei der Photopolymerisationsinitiator weiterhin einen Polymerisationsinitiator auf a-Aminoacetophenonbasis umfasst.

4. Die durch aktive Energiestrahlen härtbare Tintenstrahldrucktintenzusammensetzung nach einem der Ansprüche 1 bis 3, wobei der Photopolymerisationsinitiator weiterhin einen Photopolymerisationsinitiator mit einem Thioxanthonskelett umfasst.

5. Die durch aktive Energiestrahlen härtbare Tintenstrahltintenzusammensetzung nach einem der Ansprüche 1 bis 4, wobei die aliphatischen, ethylenisch polymerisierbaren Verbindungen weiterhin andere polyfunktionelle (Meth)acrylate umfassen.

6. Die durch aktive Energiestrahlen härtbare Tintenstrahltintenzusammensetzung nach einem der Ansprüche 1 bis 5, wobei die Menge des Pigments 4,0 Gew.-% oder mehr in Bezug auf das Gesamtgewicht der Tintenstrahltintenzusammensetzung beträgt und das Pigment 60 Gew.-% oder mehr Ruß in Bezug auf das Gesamtgewicht des Pigments umfasst.

## Revendications

1. Composition d'encre pour jet d'encre durcissable par un rayonnement d'énergie active contenant un pigment, un composé polymérisable et un initiateur de photopolymérisation,
le composé polymérisable comprenant 80 % en poids ou plus de composés aliphatiques polymérisables par voie éthylénique sur la base du poids total du composé polymérisable, les composés aliphatiques polymérisables par voie éthylénique comprenant des (méth)acrylates polyfonctionnels incluant au moins de l'acrylate de 2-(2-vinyloxyéthoxy)éthyle et du diacrylate de dipropylèneglycol,
l'initiateur de photopolymérisation comprenant un oxyde d'acylphosphine, l'oxyde d'acylphosphine comprenant un oxyde de monoacylphosphine et la quantité d'oxyde de monoacylphosphine sur la base du poids total d'oxyde d'acylphosphine étant de 70 % en poids ou plus, et
la quantité du diacrylate de dipropylèneglycol étant de 16 % en poids ou plus et la quantité de l'oxyde d'acylphosphine étant de 10,3 % en poids ou plus par rapport au poids total de la composition d'encre pour jet d'encre.

2. Composition d'encre pour jet d'encre durcissable par un rayonnement d'énergie active selon la revendication 1, comprenant en outre un solvant organique à base de glycol, la quantité de solvant organique à base de glycol étant de 0,01 à 10 % en poids sur la base du poids total de la composition d'encre.

3. Composition d'encre pour jet d'encre durcissable par un rayonnement d'énergie active selon la revendication 1 ou 2, l'initiateur de photopolymérisation comprenant en outre un initiateur de polymérisation à base d'a-aminoacétophénone.

4. Composition d'encre pour jet d'encre durcissable par un rayonnement d'énergie active selon l'une quelconque des revendications 1 à 3, l'initiateur de photopolymérisation comprenant en outre un initiateur de photopolymérisation ayant un squelette thioxanthone.

5. Composition d'encre pour jet d'encre durcissable par un rayonnement d'énergie active selon l'une quelconque des revendications 1 à 4, dans laquelle les composés aliphatiques polymérisables par voie éthylénique comprennent en outre d'autres (méth)acrylates polyfonctionnels.

6. Composition d'encre pour jet d'encre durcissable par un rayonnement d'énergie active selon l'une quelconque des revendications 1 à 5, dans laquelle la quantité de pigment est de 4,0 % en poids ou plus par rapport au poids total de la composition d'encre pour jet d'encre, et le pigment comprend 60 % en poids ou plus de noir de carbone par rapport au poids total du pigment.
